# EUROPÄISCHE PATENTSCHRIFT

(11) **EP 4 365 502 B1**
(45) Veröffentlichungstag und Bekanntmachung des Hinweises auf die Patenterteilung: **24.06.2026**
(21) Anmeldenummer: 22204994.2
(22) Anmeldetag: 02.11.2022
(51) Int. Cl.: F24F 8/108, F24F 1/029, F24F 13/28, F24F 13/20, F04D 1/06, F04D 13/12

(54) **LUFTREINIGUNGSVORRICHTUNG MIT OPTIMIERTER LUFTFÜHRUNG**
AIR CLEANING DEVICE WITH OPTIMISED AIR CONDUCTION
DISPOSITIF DE PURIFICATION D'AIR À GUIDAGE D'AIR OPTIMISÉ

(43) Veröffentlichungstag der Anmeldung: 08.05.2024
(73) Patentinhaber: IQAir AG, 9403 Goldach (CH)
(72) Erfinder: Gottschalk, Gregory, 8610 Uster (CH); Teucher, Rainer, 9404 Rorschacherberg (CH); Hammes, Frank, 9403 Goldach (CH)
(74) Vertreter: Riebling, Peter

(56) Entgegenhaltungen:
- EP-A1- 0 676 026
- EP-A1- 2 946 825
- EP-A2- 0 256 306
- WO-A1-2022/181990

## Beschreibung

Die Erfindung betrifft einen Luftreiniger/Ventilator mit optimierter Luftführung. Ein gattungsgleicher Luftreiniger ist mit dem Gegenstand der auf dem gleichen Anmelder zurückgehenden EP 3 457 047 A1 bekannt geworden.

Die genannte EP 3 457 047 A1 beschreibt eine Luftreinigungsvorrichtung mit einem Gehäuse, welches zumindest einen in einem Ansaugplenum gebildeten Lufteinsaugbereich zum Einsaugen von verschmutzter Luft in das Gehäuse und zumindest einen in einem Auslassplenum gebildeten Luftausblasbereich zum Ausblasen der gefilterten Luft aus dem Gehäuse aufweist. Im Gehäuse sind zumindest ein, um eine Ventilatorrotationsachse rotierbares Lüfterrad eines Radialventilators und zumindest ein Einsaugluftfilter zum Filtern der durch den Lufteinsaugbereich eingesaugten Luft angeordnet. Ein stromabwärts des Luftfilters gebildeter radialer Hauptdüsenluftstrom wird an einer im Gehäuse stromaufwärts des Lüfterrads angeordneten Hauptdüse in axialer Richtung auf das Lüfterrad umgelenkt.

Bei der genannte EP 3 457 047 A1 hat sich allerdings das Problem gezeigt, dass bei Anordnung einer einzigen Hauptdüse der Grossteil des radial einströmenden und gefilterten Hauptdüsenluftstroms, der dort mit dem Bezugszeichen 24 bezeichnet ist, nur im äußeren Randbereich der Hauptdüse auf das Ventilatorrad zugeführt werden kann. Dies liegt daran, dass ein Teil des Hauptdüsenluftstroms mit hoher Geschwindigkeit am Lüfterrad vorbeischiesst, was zu unerwünschten Turbulenzen, bei gleicher Luftmenge einem höheren Energiebedarf und unerwünschten Geräuschen führt.

Die EP 0 256 306 A2 zeigt eine Luftreinigungs- und befeuchtungsvorrichtung mit Luftführung bestehend aus einem Gehäuse, welches zumindest einen in einem Ansaugplenum gebildeten Lufteinsaugbereich zum Einsaugen von verschmutzter Luft in das Gehäuse und zumindest einen in einem Auslassplenum gebildeten Luftausblasbereich zum Ausblasen der gefilterten und befeuchteten Luft aus dem Gehäuse aufweist, wobei im Gehäuse ein rotierendes Lüfterrad eines Radialventilators und zumindest ein Luftfilter zum Filtern der eingesaugten Luft angeordnet sind und der stromabwärts des Luftfilters gebildete Hauptdüsenluftstrom an einer im Gehäuse stromaufwärts des Lüfterrads angeordneten Hauptdüse in Richtung auf das Lüfterrad umgelenkt wird. Dabei findet eine Aufsplitterung des Hauptdüsenluftstroms durch eine im Bereich der Hauptdüse angeordnete Hilfsdüse statt, welche mehrere aus dem Hauptdüsenluftstrom abgespalteten Hilfsdüsenluftströme in den inneren Ansaugbereich des Lüfterrads zuführt.

Nachteilig an dieser Vorrichtung ist die Bauhöhe, welche durch die Anordnung der Haupt- und Hilfsdüsen zueinander sowie der Unterbringung der Befeuchtungsbauteile sehr hoch ist. Insbesondere durch die Formgebung der Düsen, welche eine Abstreiffunktion für die im Luftstrom befindlichen Wassertropfen hat, ist zudem keine effiziente Anströmung des Lüfterrades möglich.

Der Erfindung liegt die Aufgabe zugrunde, eine Optimierung der Energieeffizienz und des Geräuschs in einen Lüftungsgerät, insbesondere einer Luftreinigungsvorrichtung, bei niedriger Bauhöhe zu erreichen.

Die Lösung der gestellten Aufgabe erfolgt gemäss der technischen Lehre des Anspruches 1.

Eine bevorzugte Ausführung sieht vor, dass zur optimierten Anströmung des Lüfterrads des Radialventilators und zwecks Homogenisierung der Luftmengen in der luftführenden Einlaufebene des Radialventilators eine radiale und axiale Trennung des Hauptdüsenluftstroms durch eine stromaufwärts vor der Hauptdüse angeordnete und den Hauptdüsenluftstrom aufsplittende Hilfsdüse erfolgt, welche einen aus dem Hauptdüsenluftstrom abgespalteten Hilfsdüsenluftstrom in den inneren Ansaugbereich des Lüfterrads zuführt.

Damit ist in dieser bevorzugten Ausführung vorgesehen, dass die stromaufwärts der Hauptdüse angeordnete Hilfsdüse in radialer Richtung vom Hauptdüsenluftstrom angeströmt ist und koaxial zur Hauptdüse zentriert ist.

Die Erfindung ist relevant für alle Lüftungsgeräte oder Luftreiniger, bei denen ein Radialventilator in Verbindung mit einem radialen Einsaugplenum steht. Die Erfindung erlaubt die Reduzierung des Energiebedarfs und des Geräuschs bei einer besonders niedrigen Bauhöhe bei Geräten mit radialer Lufteinsaugung. Die radiale Luftansaugung hat den Vorteil, dass die Front des Geräts geschlossen ist und sich somit optisch attraktiv gestalten lässt und nicht verschmutzt.

Die bevorzugten Merkmale der Erfindung sind in Anspruch 1 definiert.

Daraus ergibt sich als Resultat eine optimierte Anströmung des Radialventilators durch radiale und axiale Führung bzw. Trennung der Luftströme des gefilterten Hauptdüsenluftstroms.

Die erfindungsgemässe zweite Einsaugdüse, die als Hilfsdüse bezeichnet ist, wirkt auf den Hauptdüsenluftstrom als Splitdüse und führt zu einer axialen Lenkung und Führung eines Teils des Hauptdüsenluftstroms in den inneren Durchmesserbereich des Radialventilators hinein und führt deshalb zu einer Homogenisierung der Luftmengen in der Einlaufebene des Lüfterrads.

Der Einströmwirbel wird somit verkleinert und der aufgesplittete Hauptdüsenluftstrom wird schneller und turbulenzfreier dem Radialventilator zugeführt. Damit wird das Ziel eines energetisch und geräuschoptimierten Luftdurchsatzes und/oder eine Reduzierung des Energiebedarfs und der Geräusche erreicht.

Somit sorgt die Kombination von radialen Luftführungsrippen und mindestens einer zusätzlichen Hilfsdüse für eine optimierte Anströmung des Radialventilators. Damit wird die die Belastung des Lüfterrads durch Aufteilung des Luftstroms verbessert. Es wird verhindert, dass zu viel Luft am äusseren Rand des Lüfterrads einströmt. Dies sorgt für eine verbesserte Luftverteilung zur Achse des Lüfterrads hin, weil eine Verteilung der Luftströmung von Aussenrand zum Kern des Lüfterrads stattfindet.

Das Flächenverhältnis der Ausströmfläche der Hilfsdüse ist idealerweise ähnlich wie die Ausströmfläche der Hauptdüse. Dadurch ergibt sich eine verbesserte energetische Gesamteffizienz der Luftreinigungsvorrichtung, weil die Luftführungsrippen eine Doppelfunktion als Luftführung des Hauptdüsenluftstroms und zusätzlich einen Griffschutz gewährleisten.

Nachfolgend werden bevorzugte Abmessungen der einzelnen Teile angegeben, die jedoch nur als bevorzugte Dimensionen zu verstehen sind. Es versteht sich von selbst, dass diese Dimensionen auch abgewandelt werden können. Insbesondere können die angegebenen Abmessungen und Grössenverhältnisse auf kleinere oder größere Geräte in analoger Weise skaliert werden.

### Bevorzugte, jedoch nicht einschränkende Abmessungen:

Gesamthöhe Luftreinsaugplenum: 700 mm
Höhe Luftführungsrippen: 700 mm
Durchmesser Radialventilator: 280 mm
Einlassdurchmesser Hilfsdüse: 280 mm
Auslassdurchmesser Hilfsdüse: 195 mm
Höhe Hilfsdüse: 52 mm
Einlassdurchmesser Hauptdüse: 280 mm
Auslassdurchmesser Hauptdüse: 260 mm
Hauptdüsenhöhe: 15 mm.

### Grössenverhältnisse

Höhe der Luftführungsrippen zu Höhe Ansaugplenum: 40-100%
Abstand der Luftführungsrippen zueinander: 20-120% der Rippenhöhe
Einlassdurchmesser Hilfsdüse: 80-120% des Ventilatordurchmessers
Auslassdurchmesser Hilfsdüse: 60-80% des Ventilatordurchmessers
Höhe Hilfsdüse: 50-80% der Höhe des Ansaugplenum
Hilfsdüseneinlassfläche ist 80% bis 120% der Nettohauptdüseneinlassfläche
Hilfsdüsenauslassfläche ist 80% bis 120% der Nettohauptdüsenauslassfläche

Von besonderem Vorteil ist. dass der Hauptdüsenluftstrom mittels der gehäusefesten, im Ansaugplenum angeordneten Luftführungsrippen annähernd tangential an den Außenumfang der Hilfsdüse und der koaxial dazu angeordneten Hauptdüse gelenkt ist.

Dabei wird es bevorzugt, wenn die Hilfsdüse ringförmig ist und eine im Durchmesser erweiterte Einlassfläche aufweist, die über eine den Durchmesser düsenartig verkleinernde axiale Bogenfläche in eine im Durchmesser verkleinerte Auslassfläche übergeht.

Dadurch wirkt diese Hilfsdüse als Staudüse oder als Jetdüse, die radial am Außenumfang vom Hauptdüsenluftstrom angeströmt ist, der am Einlassrand der Hilfsdüse aufgesplittet wird und zum einen Teil am bogenförmigen und sich konisch verengenden Außenumfang der Hilfsdüse und zum anderen Teil am Innenumfang der Hilfsdüse entlang in Richtung auf die Hauptdüse mit höherer Geschwindigkeit strömt, sodass der aufgesplittete Hauptdüsenluftstrom gleichmässig auf den gesamten wirksamen Querschnitt des Lüfterrads verteilt. Aufgrund der konischen Verengung der Hilfsdüse kommt es zu einem Jet-Effekt (beschleunigter Luftstrom) an der Auslassfläche der Hilfsdüse, der auf den Mitten- und/oder Innenbereich des Lüfterrads gerichtet ist.

Weitere Merkmale sind Gegenstand der übrigen Unteransprüche.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander wie beansprucht.

Es zeigen:
Figur 1: perspektivische Darstellung einer Luftreinigungsvorrichtung, die zur Illustration der Größenverhältnisse auf einem Sideboard abgestellt ist.
Figur 2: Die explosionsartige Darstellung der einzelnen Teile der Luftreinigungsvorrichtung
Figur 3: Schnitt durch die Luftreinigungsvorrichtung
Figur 4: Draufsicht auf die Ansicht nach Figur 3
Figur 5: die perspektivische Darstellung der Ansicht nach Figur 4
Figur 6 die perspektivische Darstellung im zusammengebauten Zustand
Figur 7: Ein Schnitt durch die Luftreinigungsvorrichtung
Figur 8: die gleiche Darstellung wie Figur 7 mit Darstellung weiterer Einzelheiten
Figur 9: eine perspektivische Darstellung eines Teils des Gehäuses
Figur 10: ein Mittenschnitt durch die Darstellung nach Figur 9
Figur 11: Ein Schnitt durch die Darstellung nach Figur 10 mit Darstellung der Luftströme
Figur 12: die gleiche Darstellung wie Figur 11 mit Angabe weiterer Einzelheiten
Figur 13: die perspektivische Darstellung der Hilfsdüse

Wenn in der folgenden Beschreibung von einem Luftreinigungsgerät 1 die Rede ist, so ist dies nicht einschränken zu verstehen. Das Luftreinigungsgerät 1 kann auch als einfaches Lüftungsgerät verwendet werden, was in diesem Fall dann ohne Filterung der Luft arbeitet. Lediglich der einfacheren Beschreibung wegen wird in der folgenden Beschreibung der Begriff «Luftreinigungsgerät» verwendet.

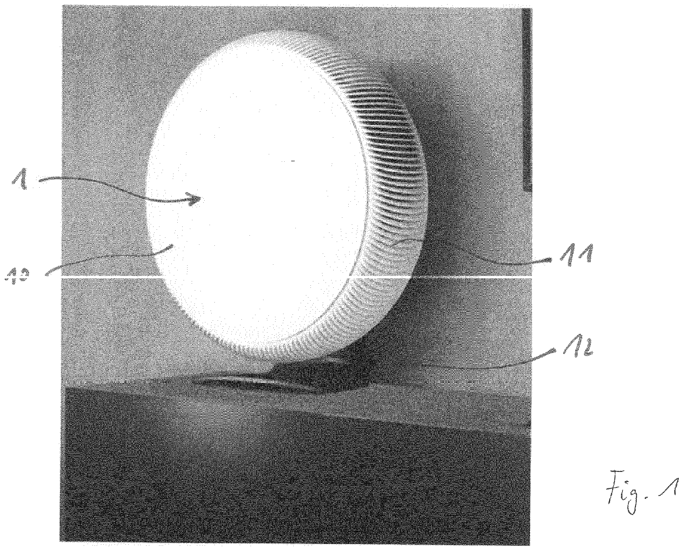

In Figur 1 ist demnach ein Luftreinigungsgerät 1 in perspektivische Darstellung gezeigt, welches mit seinem Standfuss 12 auf einem Sideboard steht und die Frontseite durch eine luftundurchlässige Abdeckscheibe 10 abgedeckt ist, was ein besonders dekoratives Aussehen möglich macht. Der Luftausblasbereich und der Lufteinlassbereich sind durch ein den Aussenumfang umschliessendes Lüftungsgitter 11 abgedeckt, wobei die Lamellen des Lüftungsgitters 11 eine zusätzliche, abgewinkelte Luftführung in Richtung auf den radial dahinterliegenden Luftfilter 2 ausüben.

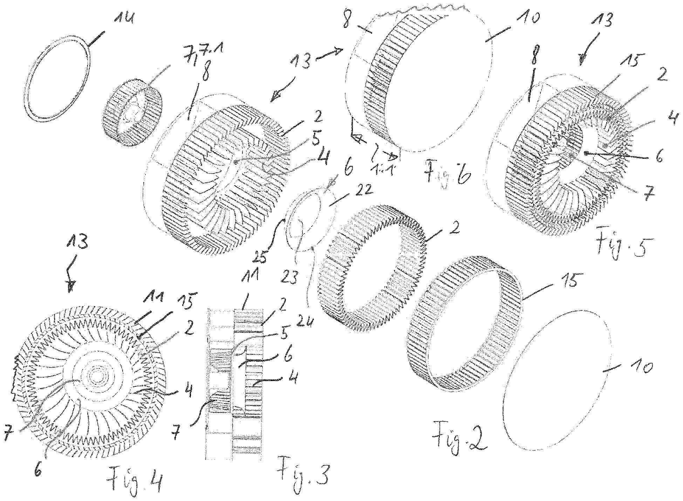

Die Figur 2 zeigt die explosionsartige Zuordnung der einzelnen Teile des Luftreinigungsgerätes 1 zueinander. Das Gehäuse ist bevorzugt scheibenförmig oder torusförmig - entsprechend der Formgebung eines für die Leichtathletik verwendeten Diskus - ausgebildet und weist eine - im Vergleich zum Durchmesser - niedrige Gesamtbauhöhe 1.1 auf.

Das Filtergehäuse 13 besteht im Wesentlichen aus einem scheiben- oder diskusförmigen Kunststoffteil, in dessen hinteren Bereich ein in radialer Richtung auswärts gerichtetes Auslassplenum 8 für die Ausblasung der gefilterten Luft in den Raum vorgesehen ist. Die durch das Auslassplenum 8 gebildete Ausblasöffnung kann durch luftdurchlässiges Lamellengitter verschlossen sein, dessen Lamellen eine Einstellung der Ausblasrichtung erlauben.

Nur in Figur 1 ist ein einlassseitiges Lüftungsgitter 11 mit seinen luftführenden Lamellen dargestellt, die einen abgewinkelten Luftstrom auf den Außenumfang des Luftfilter 2 lenken.

Im Innenraum des Gehäuses 13 ist ein Ansaugplenum 3 mit darin angeordneten Luftführungsrippen 4 ausgebildet, welche den vom Luftfilter 2 in den Innenraum des Gehäuses 13 einströmenden und gefilterten Hauptdüsenluftstrom 5.4 in Richtung auf eine Hauptdüse 5 und eine koaxial dazu ausgerichtete Hilfsdüse 6 lenken.

In Figur 2 ist noch dargestellt, dass ein Luftführungsring 15 angeordnet sein kann, der sich direkt hinter dem Lüftungsgitter 11 befindet. Es kann auch vorgesehen sein, dass der Luftführungsring 15 entfällt und stattdessen das Lüftungsgitter 11 mit seinen luftlenkenden Lamellen die abgewinkelte Luftführung in Richtung auf das Luftfilter 2 ausübt.

Im Schnitt nach Figur 3 ist erkennbar, dass die erfindungsgemäße Hilfsdüse 6 koaxial und konzentrisch zu Hauptdüse 5 angeordnet ist. Stromab der Hauptdüse 5 und der koaxial hierzu ausgerichteten Hilfsdüse 6 ist das Lüfterrad 7.1 eines Radialventilators 7 angeordnet, der von einem Motor 7.2 angetrieben ist. Die Befestigung erfolgt über einen Befestigungsring 14.

Die von dem Lüfterrad 7.1 des Radialventilators 7 verdichtete und gefilterte Luft wird aus einem Auslassplenum 8 als Luftströmung 17 ausgeblasen, die bevorzugt radial nach außen gerichtet ist.

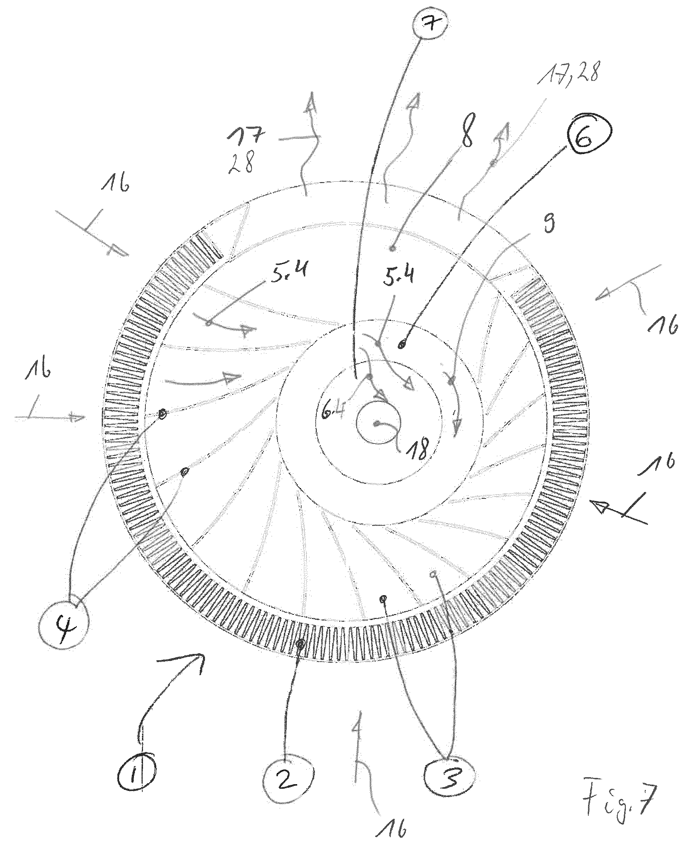

Die Figur 7 zeigt, dass die auf den Außenumfang des Luftfilters 2 wirkende Luftströmung 16 die Falten des Luftfilters 2 durchsetzt und danach in den radial äußeren Bereich von abgewinkelten, bogenförmigen Luftführungsrippen 4 im Ansaugplenum 3 gelangt.

Damit wird der Hauptdüsenluftstrom 5.4 im Ansaugplenum 3 komprimiert und gleichmäßig verteilt in annähernd tangentialer Richtung auf den Außenumfang der Hauptdüse 5 und der koaxial hierzu angeordneten Hilfsdüse 6 gelenkt.

Die Höhe des Ansaugplenums 3 entspricht bevorzugt 15-40% des Durchmessers des Lüfterrads 7.1.

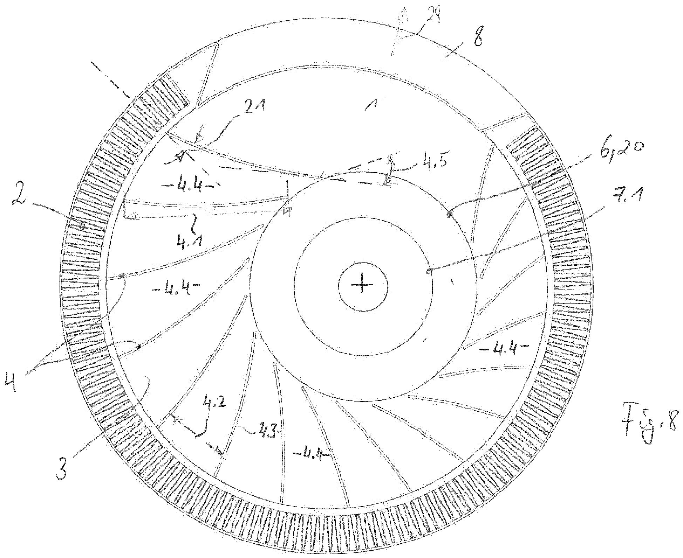

Die Figur 8 zeigt die bogenförmige Kontur der Lüftungsrippen 4, die eine bevorzugte Länge 4.1, einem bevorzugten Abstand 4.2 und eine bevorzugte Anzahl 4.3 haben, deren bevorzugte Dimensionen in den Unteransprüchen angegeben sind. Sie bilden somit jeweils sich konisch verengende Kompressionsräume 4.4, die den dadurch verdichteten Hauptdüsenluftstrom 5.4 im Winkel 4.5 nahezu tangential und in radialer Richtung an den Aussenumfang von Haupt- und Hilfsdüse heranführen.

Die Figur 7 zeigt die Wirkung der Hilfsdüse 6 auf den Hauptdüsenluftstrom 5.4, der zum Teil an den Außenumfang des Lüfterrad 7.1 des Radialventilators 7 gelenkt wird und zum anderen Teil als Hilfsdüsenluftstrom 6.4 auf den Mittenbereich und/oder Innenumfang des Lüfterrads 7.1 gerichtet ist.

Dabei wird es bevorzugt, wenn der Hauptluftstrom 5.4 im Ansaugplenum 3 in einem Winkel im Bereich von 180 bis 360 Grad in Richtung auf das Lüfterrad 7.1 des Radialventilators 7 umgelenkt wird und dabei durch die erfindungsgemässe Hilfsdüse 6 aufgesplittet wird.

In den Zeichnungen sind daher verschiedene Umlenkwinkel des Hauptluftstroms 5.4 dargestellt.

In den Fig. 2, 3, 4, 5 und 6 ist eine 360 Grad radiale Anströmung dargestellt, während die Fig. 7, 8, 9, 10, 11 und 12 eine 270 Grad radiale Anströmung des Radialventilators 7 zeigen.

Dadurch ergibt sich eine Homogenisierung der auf das Lüfterrad 7.1 zugeführten Luftmenge. Das Lüfterrad 7.1 hat die Rotationsachse 18.

Aus Figur 7 ist zu entnehmen, dass die aus dem Auslassplenum 8 ausströmende Luftströmung 17 den in radialer Richtung gerichteten Ausblasluftstrom 28 bildet.

Die Figur 8. zeigt weitere Einzelheiten des Aufbaus gemäß Figur 7. Dabei ist erkennbar, dass die das Luftfilter 2 durchsetzende Strömung in den Bereich der bogenförmig abgebogenen Luftführungsrippen 4 gelangt, die in einem Winkel 21 luftführend an das Luftfilter 2 anschließen und dabei konisch sich verengende Kompressionsräume 4.4 bilden. Der Auslass des jeweiligen Kompressionsraums 4.4 schliesst sich in etwa tangentialem Winkel 4.5 an den Außenumfang der Hauptdüse 5 und der Hilfsdüse 6 an. Die bevorzugten Masse, wie Länge 4.1, Abstand 4.2, Anzahl 4.3, Winkel 4.5 und Höhe 4.6 der Luftführungsrippen 4 sind Gegenstand der Unteransprüche.

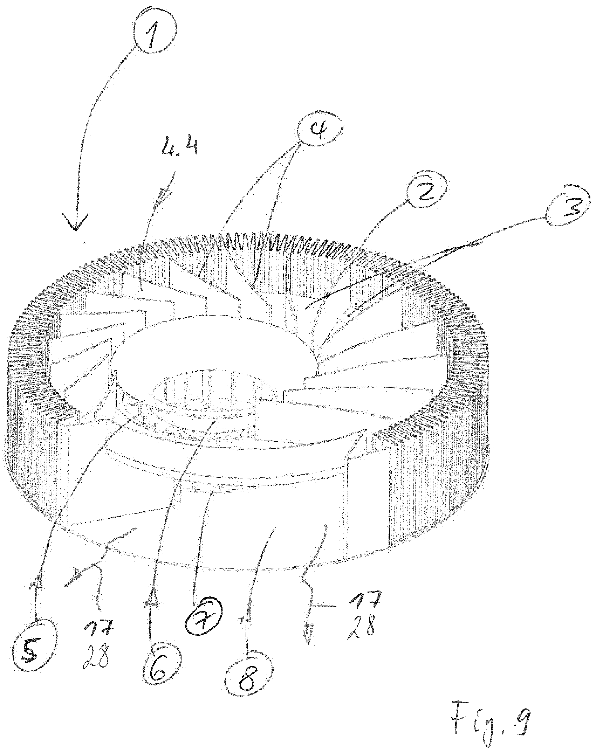

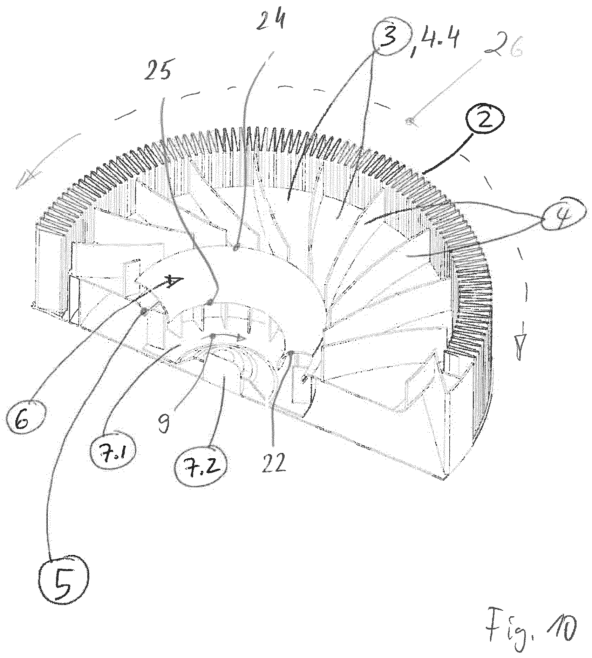

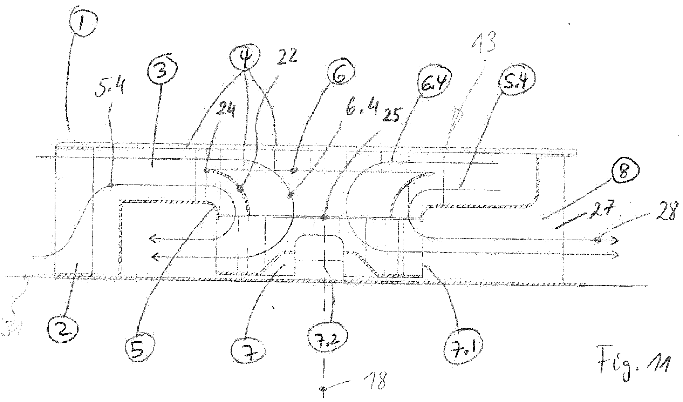

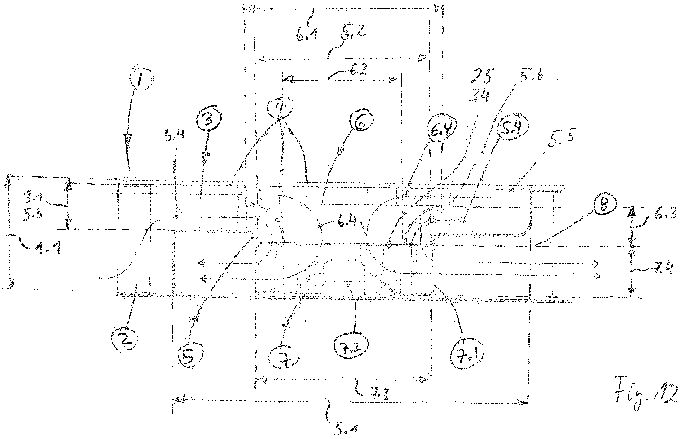

Aus den Figuren 9 und 10, in Verbindung mit den Figuren 11 und 12 lässt sich entnehmen, dass der in radialer Richtung auf die Hauptdüse 5 gerichtete Hauptdüsenluftstrom 5.4 im Ansaugplenum 3 strömt. Der Hauptdüsenluftstrom 5.4 wird somit zunächst an einer Bogenkante der Hauptdüse 5 im Bereich des Einlassdurchmesser 5.1 bevorzugt um 180° umgelenkt. Koaxial zur Öffnung der Hauptdüse 5 ist die erfindungsgemäße Hilfsdüse 6 stromaufwärts der Hauptdüse 5 angeordnet, welche einen Einlassdurchmesser 6.1 und einen Auslassdurchmesser 6.2 aufweist. Die Höhe der Hilfsdüse ist mit dem Bezugszeichen 6.3 angegeben.

Analog bildet die Hauptdüse 5 einen Einlassdurchmesser 5.1 und einen Auslassdurchmesser 5.2 bei einer Höhe 5.3. Die Hauptdüsen-Einlassfläche ist mit 5.5 und deren Auslassfläche mit 5.6 angegeben.

Aus Figur 11 ist zu entnehmen, dass durch die koaxiale Anordnung von Hauptdüse 5 und Hilfsdüse 6 eine Aufspaltung des Hauptdüsenluftstroms 5.4 vor dem Lüfterrad 7.1 und dessen Durchmesser 7.3 erfolgt. Die Höhe des Radialventilators ist mit 7.4 angegeben.

Somit wird der Hauptdüsenluftstrom 5.4 an der Innenseite der Bogenfläche 22 der Hilfsdüse 6 in einen inneren Hilfsdüsenluftstrom 6.4 aufgeteilt und der Rest des Hauptdüsenluftstroms strömt an der Außenseite der Bogenfläche 22 der Hilfsdüse 6 und wird an der Bogenkante der Hauptdüse 5 umgelenkt.

Damit gelingt erstmals eine konzentrierte Zuführung eines Hilfsdüsenluftstroms 6.4 auch in den Mittenbereich des Lüfterrads 7.1, was bisher nicht möglich war.

Die Figur 12 zeigen die Größenverhältnisse und Abmessungen der einzelnen Teile zueinander, wobei die gleichen Teile der Figur 11 verwendet werden. Der Durchmesser des Einlassrandes 24 der Hilfsdüse 6 ist somit größer als der Durchmesser des Auslassrandes 25 der Hilfsdüse 6. Der Außenumfang der Hilfsdüse wird mit dem Bezugszeichen 20 bezeichnet.

Somit bildet die Hilfsdüse 6 eine als Jet-Düse wirkende Durchlassöffnung 23 für den Hilfsdüsenstrom 6.4, der als ein in der Geschwindigkeit erhöhter Luftstrom auf den inneren Bereich des Lüfterrades 7.1 gelenkt wird.

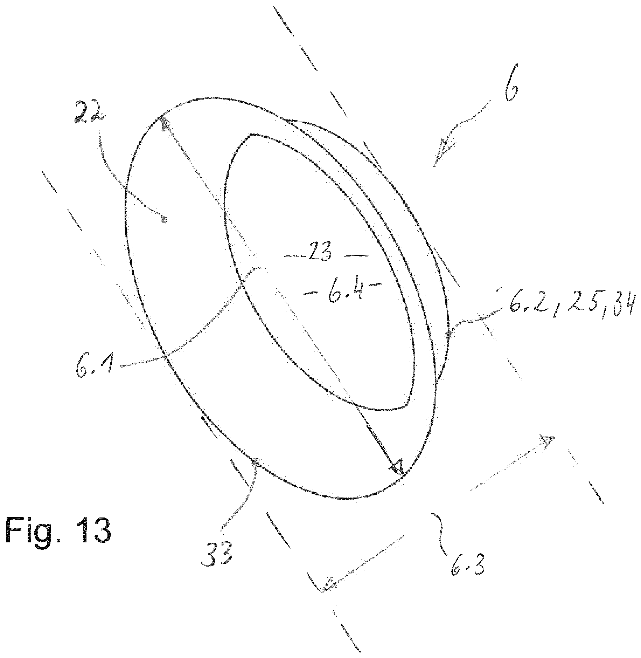

Die Figur 13 zeigt einige Merkmale der Hilfsdüse 6. Es sind die einlaufseitige Einlassfläche 33 und die im Durchmesser verkleinerte stromabwärts gelegene Auslassfläche 34 gezeigt. Die Höhe der Hilfsdüse ist mit dem Bezugszeichen 6.3 und die konisch sich verengende Durchlassöffnung mit dem Bezugszeichen 23 angegeben.

Die radiale Ebene des Gehäuses 13 ist mit dem Bezugszeichen 31 angegeben, während die Ausblasrichtung das Bezugszeichen 30 und die Richtung eingesaugten Luft das Bezugszeichen 29 tragen. Der Luftauslassbereich ist insgesamt mit dem Bezugszeichen 27 bezeichnet.

Die bevorzugten Abmessungen und Grössenverhältnisse sind nachfolgend angegeben:
Dabei wird es bevorzugt, wenn die Hilfsdüse 6 ringförmig ist und eine im Durchmesser 6.1 erweiterte Einlassfläche 33 aufweist, die über eine den Durchmesser 6.1 düsenartig verkleinernde, axiale Bogenfläche 22 in eine im Durchmesser 6.2 verkleinerte Auslassfläche 34 übergeht.

Dabei wird es bevorzugt, wenn der Auslassdurchmesser 6.2 der Hilfsdüse 6 im Bereich zwischen 60 bis 80% kleiner ist als der Durchmesser 7.3 des Lüfterrads 7.1.

Dabei wird es bevorzugt, wenn der Einlassdurchmesser 6.1 der Hilfsdüse 6 im Bereich zwischen 80 bis 120% des Durchmessers 7.3 des Lüfterrads 7.1 liegt.

Dabei wird es bevorzugt, wenn die Höhe 6.3 der Hilfsdüse 6 etwa 50 bis 80% der Höhe 3.1 des Ansaugplenums 3 entspricht.

Dabei wird es bevorzugt, wenn die Einlassfläche 33 der Hilfsdüse 6 etwa 80 bis 120% der Hauptdüseneinlassfläche 5.5 entspricht.

Dabei wird es bevorzugt, wenn die Auslassfläche 34 der Hilfsdüse 6 etwa 80 bis 120% der Hauptdüsenauslassfläche 5.6 entspricht.

Dabei wird es bevorzugt, wenn das Verhältnis der Luftführungsrippen 4 zur Höhe des Ansaugplenums 3 im Bereich zwischen 40-100% liegt.

Dabei wird es bevorzugt, wenn der Abstand 4.2 der Luftführungsrippen 4 zueinander im Bereich zwischen 20-120% der Rippenhöhe 4.6 liegt.

Dabei wird es bevorzugt, wenn das Gehäuse 13 scheiben- oder torusförmig ausgebildet ist und wenn der Lufteinsaugbereich 26 und der Luftausblasbereich 27 am Aussenumfang des Gehäuses 13 angeordnet sind.

Dabei wird es bevorzugt, wenn die Gesamthöhe 3.1 des Ansaugplenums 3 und die Höhe 4.6 der Luftführungsrippen etwa 700 mm betragen.

Dabei wird es bevorzugt, wenn der Durchmesser 7.3 des Lüfterrads 7.1 des Radialventilators 7 und der Einlassdurchmesser 6.1 der Hilfsdüse 6 etwa 280 mm betragen.

Dabei wird es bevorzugt, wenn der Auslassdurchmesser 6.2 der Hilfsdüse 6 etwa 195 mm bei einer bevorzugten Höhe 6.3 von 52 mm betragen.

Dabei wird es bevorzugt, wenn der Einlassdurchmesser 5.1 der Hauptdüse 5 bevorzugt 280 mm und der Auslassdurchmesser 5.2 der Hauptdüse 5 bevorzugt 260 mm betragen und wenn die Höhe 5.3 der Hauptdüse 5 bevorzugt 15 mm beträgt.

### Bezugszeichenliste

- 1: Luftreinigungsgerät oder Lüftungsgerät
- 1.1: Gesamtbauhöhe Luftreinigungsgerät
- 2: Luftfilter
- 3: Ansaugplenum
- 3.1: Höhe Ansaugplenum (15%-35% des Ventilatordurchmessers)
- 4: Luftführungsrippen
- 4.1: Länge
- 4.2: Abstand
- 4.3: Anzahl
- 4.4: Kompressionsraum
- 4.5: Winkel
- 4.6: Höhe
- 5: Hauptdüse
- 5.1: Einlassdurchmesser Hauptdüse
- 5.2: Auslassdurchmesser Hauptdüse
- 5.3: Höhe Hauptdüse
- 5.4: Hauptdüsenluftstrom
- 5.5: Hauptdüsen-Einlassfläche
- 5.6: Hauptdüsen-Auslassfläche
- 6: Hilfsdüse
- 6.1: Einlassdurchmesser Hilfsdüse
- 6.2: Auslassdurchmesser Hilfsdüse (60-80% des Ventilatordurchmessers)
- 6.3: Höhe Hilfsdüse
- 6.4: Hilfsdüsenluftstrom
- 7: Radialventilator
- 7.1: Lüfterrad
- 7.2: Motor
- 7.3: Durchmesser Radialventilator
- 7.4: Höhe Radialventilator
- 8: Auslassplenum
- 9: Pfeilrichtung
- 10: Abdeckscheibe
- 11: Lüftungsgitter
- 12: Standfuss
- 13: Filtergehäuse
- 14: Befestigungsring
- 15: Luftführungsring
- 16: Luftströmung (Einlass)
- 17: Luftströmung (Auslass)
- 18: Rotationsachse (von 7.1)
- 19: Tangentialwinkel (von 4.5)
- 20: Außenumfang (von 6)
- 21: Winkel (von 4)
- 22: Bogenfläche (von 6)
- 23: Durchlassöffnung (von 6)
- 24: Einlassrand (von 6)
- 25: Auslassrand (von 6)
- 26: Lufteinsaugbereich
- 27: Luftausblasbereich
- 28: Ausblasluftstrom
- 29: Richtung (Einsaugrichtung)
- 30: Richtung (Ausblasrichtung)
- 31: radiale Ebene (Gehäuse 13)
- 32:
- 33: Einlassfläche (von 6)
- 34: Auslassfläche (von 6)

## Patentansprüche

1. Luftreinigungsvorrichtung (1) mit Luftführung bestehend aus einem Gehäuse (13), welches zumindest einen in einem Ansaugplenum (3) gebildeten Lufteinsaugbereich (26) zum Einsaugen von verschmutzter Luft in das Gehäuse (13) und zumindest einen in einem Auslassplenum (8) gebildeten Luftausblasbereich (27) zum Ausblasen der gefilterten Luft aus dem Gehäuse (13) aufweist, wobei im Gehäuse (13) zumindest ein, um eine Ventilatorrotationsachse (18) rotierbares Lüfterrad (7.1) eines Radialventilators (7) und zumindest ein Luftfilter (2) zum Filtern der durch den Lufteinsaugbereich (26) eingesaugten Luft angeordnet sind und wobei im Gehäuse (13) eine stromaufwärts des Lüfterrads (7.1) angeordneten Hauptdüse (5) angeordnet ist, um den stromabwärts des Luftfilters (2) gebildeten Hauptdüsenluftstrom (5.4) an die Hauptdüse (5) in Richtung des Lüfterrads (7.1) umzulenken, wobei eine Aufsplitterung des Hauptdüsenluftstroms (5.4) durch eine im Bereich der Hauptdüse (5) angeordnete Hilfsdüse (6) erfolgt, welche einen aus dem Hauptdüsenluftstrom (5.4) abgespalteten Hilfsdüsenluftstrom (6.4) in den inneren Ansaugbereich des Lüfterrads (7.1) zuführt, **dadurch gekennzeichnet, dass** die Hilfsdüse (6) stromaufwärts vor der Hauptdüse (5) angeordnet ist und dass zur optimierten Anströmung des Lüfterrads (7.1) des Radialventilators (7) und zwecks Homogenisierung der Luftmengen in der luftführenden Einlaufebene des Radialventilators (7) der Hauptdüsenluftstrom (5.4) mittels am Gehäuse (13) fest, im Ansaugplenum (3) angeordneten Luftführungsrippen (4) annähernd tangential an den Außenumfang der Hilfsdüse (6) gelenkt ist.

2. Luftreinigungsvorrichtung (1) nach Anspruch 1, **dadurch gekennzeichnet, dass** die Hilfsdüse (6) in radialer Richtung vom Hauptdüsenluftstrom (5.4) angeströmt ist und koaxial und konzentrisch zur Hauptdüse (5) zentriert ist

3. Luftreinigungsvorrichtung (1) nach Anspruch 1 oder 2, **dadurch gekennzeichnet, dass** die bogenförmigen Luftführungsrippen (4) konisch sich verengende Kompressionsräume (4.4) bilden, die den dadurch verdichteten Hauptdüsenluftstrom (5.4) in einem Winkel (4.5) nahezu tangential und in radialer Richtung auch an den Aussenumfang der Hauptdüse neben der Hilfsdüse heranführen.

4. Luftreinigungsvorrichtung (1) nach einem der Ansprüche 1 bis 3, **dadurch gekennzeichnet, dass** die Hilfsdüse (6) ringförmig ist und eine im Durchmesser (6.1) erweiterte Einlassfläche (33) aufweist, die über eine den Durchmesser (6.1) düsenartig verkleinernde axiale Bogenfläche (22) in eine im Durchmesser (6.2) verkleinerte Auslassfläche (34) übergeht.

5. Luftreinigungsvorrichtung (1) nach Anspruch 4, **dadurch gekennzeichnet, dass** der Auslassdurchmesser (6.2) der Hilfsdüse (6) im Bereich zwischen 60 bis 80% kleiner ist als der Durchmesser (7.3) des Lüfterrads (7.1).

6. Luftreinigungsvorrichtung (1) nach Anspruch 4 oder 5, **dadurch gekennzeichnet, dass** der Einlassdurchmesser (6.1) der Hilfsdüse (6) im Bereich zwischen 80 bis 120% des Durchmessers (7.3) des Lüfterrads (7.1) liegt.

7. Luftreinigungsvorrichtung (1) nach einem der Ansprüche 4 bis 6, **dadurch gekennzeichnet, dass** die Höhe (6.3) der Hilfsdüse (6) etwa 50 bis 80% der Höhe (3.1) des Ansaugplenums (3) entspricht.

8. Luftreinigungsvorrichtung (1) nach einem der Ansprüche 4 bis 7, **dadurch gekennzeichnet, dass** die Einlassfläche (33) der Hilfsdüse (6) etwa 80 bis 120% der Hauptdüseneinlassfläche (5.5) entspricht.

9. Luftreinigungsvorrichtung (1) nach einem der Ansprüche 4 bis 8, **dadurch gekennzeichnet, dass** die Auslassfläche (34) der Hilfsdüse (6) etwa 80 bis 120% der Hauptdüsenauslassfläche (5.6) entspricht.

10. Luftreinigungsvorrichtung (1) nach einem der Ansprüche 1 bis 9, **dadurch gekennzeichnet, dass** das Verhältnis der Luftführungsrippen (4) zu Höhe Ansaugplenums (3) im Bereich zwischen 40-100% liegt.

11. Luftreinigungsvorrichtung (1) nach einem der Ansprüche 1 bis 10, **dadurch gekennzeichnet, dass** der Abstand (4.2) der Luftführungsrippen (4) zueinander im Bereich zwischen 20-120% der Rippenhöhe (4.6) liegt.

12. Luftreinigungsvorrichtung (1) nach einem der Ansprüche 1 bis 11, **dadurch gekennzeichnet, dass** das Gehäuse (13) scheiben- oder torusförmig ausgebildet ist und dass der Lufteinsaugbereich (26) und der Luftausblasbereich (27) am Außenumfang des Gehäuses (13) angeordnet sind.

13. Luftreinigungsvorrichtung (1) nach einem der Ansprüche 1 bis 12, **dadurch gekennzeichnet, dass** das die Gesamthöhe (3.1) des Ansaugplenums (3) und die Höhe (4.6) der Luftführungsrippen (4) etwa 700 mm betragen.

14. Luftreinigungsvorrichtung (1) nach einem der Ansprüche 1 bis 13, **dadurch gekennzeichnet, dass** der Durchmesser (7.3) des Lüfterrads (7.1) des Radialventilators (7) und der Einlassdurchmesser (6.1) der Hilfsdüse (6) etwa 280 mm betragen.

15. Luftreinigungsvorrichtung (1) nach einem der Ansprüche 1 bis 14, **dadurch gekennzeichnet, dass** der Auslassdurchmesser (6.2) der Hilfsdüse (6) etwa 195 mm bei einer bevorzugten Höhe (6.3) von 52 mm betragen.

16. Luftreinigungsvorrichtung (1) nach einem der Ansprüche 1 bis 15, **dadurch gekennzeichnet, dass** der Einlassdurchmesser (5.1) der Hauptdüse (5) bevorzugt 280 mm und der Auslassdurchmesser (6.2) der Hilfsdüse (6) bevorzugt 260 mm betragen und dass die Höhe (5.3) der Hauptdüse (5) bevorzugt 15 mm beträgt.

17. Luftreinigungsvorrichtung (1) nach einem der Ansprüche 1 bis 16, **dadurch gekennzeichnet, dass** der Hauptluftstrom (5.4) im Ansaugplenum (3) in einem Winkel im Bereich von 180 bis 360 Grad in Richtung auf das Lüfterrad (7.1) des Radialventilators (7) umgelenkt wird.

## Claims

1. An air purification device (1) with an air ducting system comprising a housing (13) that includes at least one air intake section (26) formed in an intake plenum (3) for drawing contaminated air into the housing (13) and at least one air outlet section (27) formed in an outlet plenum (8) for blowing the filtered air from the housing (13), wherein at least one fan propeller (7.1) of a radial fan (7), which is rotatable about a fan rotation axis (18), and at least one air filter (2) for filtering the air drawn in through the air intake section (26) are arranged, and wherein a main nozzle (5) is arranged in the housing (13) upstream of the fan propeller (7.1) to redirect the main nozzle air flow (5.4) formed downstream of the air filter (2) to the main nozzle (5) in the direction of the fan propeller (7.1), wherein the main nozzle air stream (5.4) is split by an auxiliary nozzle (6) arranged in the region of the main nozzle (5), which feeds an auxiliary nozzle air stream (6.4) into the inner intake section of the fan propeller (7.1), **characterised in that** the auxiliary nozzle (6) is arranged upstream of the main nozzle (5) and that for optimized airflow to the fan propeller (7.1) of the radial fan (7) and for homogenising the air volumes in the air-conducting inlet plane of the radial fan (7), the main nozzle air stream (5.4) is directed by means of air-guiding ribs (4), which are arranged in the intake plenum (3) in a manner so as to be fixed to the housing (13), approximately tangentially to the outer circumference of the auxiliary nozzle (6).

2. The air purification device (1) according to claim 1, **characterised in that** the auxiliary nozzle (6) is flowed upon in the radial direction by the main nozzle air stream (5.4) and is centred coaxially and concentrically with respect to the main nozzle (5).

3. The air purification device (1) according to claim 1 or 2, **characterised in that** the arched air-guiding ribs (4) form conically narrowing compression chambers (4.4) that guide the main nozzle air stream (5.4) compressed thereby at an angle (4.5) that is nearly tangential and, in the radial direction, also toward the outer circumference of the main nozzle adjacent to the auxiliary nozzle.

4. The air purification device (1) according to any one of claims 1 to 3, **characterised in that** the auxiliary nozzle (6) is annular and has an inlet area (33) with an enlarged diameter (6.1), which transitions via an axial curved surface (22), which reduces the diameter (6.1) in a nozzle-like manner, into an outlet area (34) with a reduced diameter (6.2).

5. The air purification device (1) according to claim 4, **characterised in that** the outlet diameter (6.2) of the auxiliary nozzle (6) is between 60% and 80% smaller than the diameter (7.3) of the fan impeller (7.1).

6. The air purification device (1) according to claim 4 or 5, **characterised in that** the inlet diameter (6.1) of the auxiliary nozzle (6) lies in the range of 80 to 120% of the diameter (7.3) of the fan propeller (7.1).

7. The air purification device (1) according to any one of claims 4 to 6, **characterised in that** the height (6.3) of the auxiliary nozzle (6) corresponds to approximately 50 to 80% of the height (3.1) of the intake plenum (3).

8. The air purification device (1) according to any one of claims 4 to 7, **characterised in that** the inlet area (33) of the auxiliary nozzle (6) corresponds to approximately 80 to 120% of the main nozzle inlet area (5.5).

9. The air purification device (1) according to any one of claims 4 to 8, **characterised in that** the outlet area (34) of the auxiliary nozzle (6) corresponds to approximately 80 to 120% of the main nozzle outlet area (5.6).

10. The air purification device (1) according to any one of claims 1 to 9, **characterised in that** the ratio of the air-guiding ribs (4) to the height of the intake plenum (3) lies in the range of 40-100%.

11. The air purification device (1) according to any one of claims 1 to 10, **characterised in that** the spacing (4.2) between the air-guiding ribs (4) lies in the range of 20-120% of the rib height (4.6).

12. The air purification device (1) according to any one of claims 1 to 11, **characterised in that** the housing (13) is designed in the shape of a disc or a torus and that the air intake area (26) and the air outlet area (27) are arranged on the outer circumference of the housing (13).

13. The air purification device (1) according to any one of claims 1 to 12, **characterised in that** the total height (3.1) of the intake plenum (3) and the height (4.6) of the air-guiding ribs (4) are approximately 700 mm.

14. The air purification device (1) according to any one of claims 1 to 13, **characterised in that** the diameter (7.3) of the fan propeller (7.1) of the radial fan (7) and the inlet diameter (6.1) of the auxiliary nozzle (6) are approximately 280 mm.

15. The air purification device (1) according to any one of claims 1 to 14, **characterised in that** the outlet diameter (6.2) of the auxiliary nozzle (6) is approximately 195 mm at a preferred height (6.3) of 52 mm.

16. The air purification device (1) according to any one of claims 1 to 15, **characterised in that** the inlet diameter (5.1) of the main nozzle (5) is preferably 280 mm and the outlet diameter (6.2) of the auxiliary nozzle (6) is preferably 260 mm, and that the height (5.3) of the main nozzle (5) is preferably 15 mm.

17. The air purification device (1) according to any one of claims 1 to 16, **characterised in that** the main air flow (5.4) in the intake plenum (3) is redirected at an angle in the range of 180 to 360 degrees toward the propeller (7.1) of the radial fan (7).

## Revendications

1. Dispositif de purification d'air (1) avec guidage d'air, constitué d'un boîtier (13), qui présente au moins une zone d'admission d'air par aspiration (26) formée dans un plénum d'aspiration (3) pour aspirer de l'air pollué dans le boîtier (13) et au moins une zone d'évacuation d'air par soufflage (27) formée dans un plénum de sortie (8) pour évacuer par soufflage l'air filtré du boîtier (13), dans lequel au moins une roue de ventilateur (7.1) d'un ventilateur radial (7) pouvant tourner autour d'un axe de rotation de ventilateur (18) et au moins un filtre à air (2) destiné à filtrer l'air aspiré par la zone d'admission d'air par aspiration (26) sont disposés dans le boîtier (13), et dans lequel une buse principale (5), disposée en amont de la roue de ventilateur (7.1), est disposée dans le boîtier (13) pour dévier le flux d'air de buse principale (5.4) formé en aval du filtre à air (2) sur la buse principale (5), en direction de la roue de ventilateur (7.1), dans lequel une division du flux d'air de buse principale (5.4) est effectuée par une buse auxiliaire (6) disposée dans la zone de la buse principale (5), laquelle amène un flux d'air de buse auxiliaire (6.4) séparé du flux d'air de buse principale (5.4) dans la zone d'aspiration intérieure de la roue de ventilateur (7.1), **caractérisé en ce que** la buse auxiliaire (6) est disposée en amont de la buse principale (5), et que, pour optimiser l'afflux vers la roue de ventilateur (7.1) du ventilateur radial (7) et dans le but d'homogénéiser les quantités d'air dans le plan d'entrée à guidage d'air du ventilateur radial (7), le flux d'air de buse principale (5.4) est dirigé presque tangentiellement sur la périphérie extérieure de la buse auxiliaire (6) au moyen de nervures de guidage d'air (4) disposées dans le plénum d'aspiration (3) de manière solidaire sur le boîtier (13).

2. Dispositif de purification de l'air (1) selon la revendication 1, **caractérisé en ce que** le flux d'air de buse principale (5.4) afflue dans la direction radiale en la buse auxiliaire (6), qui est centrée coaxialement et concentriquement par rapport à la buse principale (5).

3. Dispositif de purification de l'air (1) selon la revendication 1 ou 2, **caractérisé en ce que** les nervures de guidage de l'air (4) en forme d'arc forment des chambres de compression (4.4) se rétrécissant de manière conique, qui amènent le flux d'air de buse principale (5.4) ainsi comprimé selon un angle (4.5) quasiment tangentiel et dans la direction radiale également à la périphérie extérieure de la buse principale à côté de la buse auxiliaire.

4. Dispositif de purification de l'air (1) selon l'une des revendications 1 à 3, **caractérisé en ce que** la buse auxiliaire (6) est annulaire et présente une surface d'entrée (33) avec un diamètre (6.1) élargi, qui passe dans une surface de sortie (34) avec un diamètre (6.2) réduit par une surface courbe axiale (22) réduisant à la manière d'une buse le diamètre (6.1).

5. Dispositif de purification de l'air (1) selon la revendication 4, **caractérisé en ce que** le diamètre de sortie (6.2) de la buse auxiliaire (6) est inférieur au diamètre (7.3) de la roue de ventilateur (7.1), dans la plage de 60 à 80 %.

6. Dispositif de purification de l'air (1) selon la revendication 4 ou 5, **caractérisé en ce que** le diamètre d'entrée (6.1) de la buse auxiliaire (6) se situe dans la plage de 80 à 120 % du diamètre (7.3) de la roue de ventilateur (7.1).

7. Dispositif de purification de l'air (1) selon l'une des revendications 4 à 6, **caractérisé en ce que** la hauteur (6.3) de la buse auxiliaire (6) correspond à environ 50 à 80 % de la hauteur (3.1) du plénum d'aspiration (3).

8. Dispositif de purification de l'air (1) selon l'une des revendications 4 à 7, **caractérisé en ce que** la surface d'entrée (33) de la buse auxiliaire (6) correspond à environ 80 à 120 % de la surface d'entrée de buse principale (5.5).

9. Dispositif de purification de l'air (1) selon l'une des revendications 4 à 8, **caractérisé en ce que** la surface de sortie (34) de la buse auxiliaire (6) correspond à environ 80 à 120 % de la surface de sortie de buse principale (5.6).

10. Dispositif de purification de l'air (1) selon l'une des revendications 1 à 9, **caractérisé en ce que** le rapport des nervures de guidage d'air (4) à la hauteur du plénum d'aspiration (3) se situe dans la plage 40-100 %.

11. Dispositif de purification de l'air (1) selon l'une des revendications 1 à 10, **caractérisé en ce que** l'espacement (4.2) des nervures de guidage de l'air (4) entre elles se situe dans la plage 20-120 % de la hauteur de nervure (4.6).

12. Dispositif de purification de l'air (1) selon l'une des revendications 1 à 11, **caractérisé en ce que** le boîtier (13) est réalisé en forme de disque ou de tore et que la zone d'admission d'air par aspiration (26) et la zone d'évacuation d'air par soufflage (27) sont disposées à la périphérie extérieure du boîtier (13).

13. Dispositif de purification de l'air (1) selon l'une des revendications 1 à 12, **caractérisé en ce que** la hauteur totale (3.1) du plénum d'aspiration (3) et la hauteur (4.6) des nervures de guidage d'air (4) sont d'environ 700 mm.

14. Dispositif de purification de l'air (1) selon l'une des revendications 1 à 13, **caractérisé en ce que** le diamètre (7.3) de la roue de ventilateur (7.1) du ventilateur radial (7) et le diamètre d'entrée (6.1) de la buse auxiliaire (6) sont d'environ 280 mm.

15. Dispositif de purification de l'air (1) selon l'une des revendications 1 à 14, **caractérisé en ce que** le diamètre de sortie (6.2) de la buse auxiliaire (6) est d'environ 195 mm pour une hauteur préférée (6.3) de 52 mm.

16. Dispositif de purification de l'air (1) selon l'une des revendications 1 à 15, **caractérisé en ce que** le diamètre d'entrée (5.1) de la buse principale (5) est, de manière préférée, de 280 mm, et le diamètre de sortie (6.2) de la buse auxiliaire (6) est, de manière préférée, de 260 mm, et que la hauteur (5.3) de la buse principale (5) est, de manière préférée, de 15 mm.

17. Dispositif de purification de l'air (1) selon l'une des revendications 1 à 16, **caractérisé en ce que** le flux d'air principal (5.4) est dévié dans le plénum d'aspiration (3) selon un angle dans la plage de 180 à 360 degrés en direction de la roue de ventilateur (7.1) du ventilateur radial (7).
